# EUROPÄISCHE PATENTSCHRIFT

(11) **EP 3 867 542 B1**
(45) Veröffentlichungstag und Bekanntmachung des Hinweises auf die Patenterteilung: **07.09.2022**
(21) Anmeldenummer: 19801678.4
(22) Anmeldetag: 21.10.2019
(51) Int. Cl.: F16C 19/28, F16C 19/50, F16C 33/46, F16C 33/48, F16C 41/04

(54) **VERFAHREN ZUR HERSTELLUNG EINES LAGERKÄFIGS FÜR EINE SCHEIBENBREMSE, FORMTEIL HIERFÜR UND LAGERKÄFIG**
PROCESS FOR MANUFACTURING A BEARING CAGE FOR A DISK BRAKE, MOLD PART THEREFOR, AND BEARING CAGE
PROCÉDÉ DE FABRICATION D'UNE CAGE DE ROULEMENT POUR UN FREIN À DISQUE, PIÈCE MOULÉE POUR CELLE-CI ET CAGE DE ROULEMENT

(30) Priorität: 19.10.2018 DE 102018126032
(43) Veröffentlichungstag der Anmeldung: 25.08.2021
(73) Patentinhaber: Haldex Brake Products AB, 261 24 Landskrona (SE)
(72) Erfinder: WELIN, Hans, 26013 Sankt Ibb (SE)
(74) Vertreter: Habermann, Hruschka & Schnabel
(86) Internationale Anmeldenummer: PCT/EP2019/078616
(87) Internationale Veröffentlichungsnummer: WO 2020/079286

(56) Entgegenhaltungen:
- EP-A1- 2 085 627
- EP-A2- 2 696 092
- DE-A1-102004 031 792

## Beschreibung

Die vorliegende Erfindung betrifft ein Verfahren zur Herstellung eines einstückigen Lagerkäfigs für ein Nadellager zur Lagerung eines Zuspannhebels einer Zuspanneinrichtung in einer Scheibenbremse. Des Weiteren betrifft die vorliegende Erfindung einen solchen Lagerkäfig sowie eine Scheibenbremse mit einer Zuspanneinrichtung, die einen solchen Lagerkäfig nutzt, und darüber hinaus ein Formteil zur Verwendung in einem solchen Herstellungsverfahren.

Bei den aus dem Stand der Technik bekannten Scheibenbremsen, insbesondere bei pneumatisch betätigbaren Scheibenbremsen für Nutzfahrzeuge, können in dem Bremssattel unterschiedlich ausgebildete Zuspanneinrichtungen angeordnet sein, die dem Zuspannen der Bremse dienen, d.h. dem Aufbringen der Bremskraft während dem Bremsvorgang. In der Regel kommt hierbei ein über eine exzentrische Lagerung drehbar gelagerter Drehhebel zum Einsatz, der sich im rückseitigen Gehäuseabschnitt des Bremssattels über Nadellager abstützt.

Hinsichtlich des zum Einsatz kommenden Lagerkäfigs sind im Stand der Technik unterschiedliche Konfigurationen realisiert. So zeigt beispielsweise die EP 1766259 B1 einen Lagerkäfig, der aus einem Innenring als Lagerkäfig besteht, der von einem Außenring teilweise umgriffen wird.

Zur Lagerung des Drehhebels ist das Nadellager kreisbogenabschnittsförmig ausgebildet und weist zumindest einen Lagerkäfig mit mehreren Taschen auf, in denen Lagernadeln drehbar aufgenommen sind. Um die Lagernadeln verliersicher, jedoch als in der Regel zylindrische Rollkörper drehbar in den Taschen zu halten, weisen diese, in der Regel an ihren Rändern und Kanten, geometrische Strukturen auf, wie bspw. Sperrzungen oder dergleichen, die als Halteelemente für die walzenartigen Lagernadeln fungieren. Derartige Sperrzungen sind bspw. an der der Lagerfläche für den Drehhebel gegenüberliegenden Seite vorgesehen und verhindern ein Herausfallen der Lagernadeln, wobei diese Sperrzungen gleichzeitig der Führung und drehbaren Lagerung der Lagernadeln dienen können.

Bei einstückig ausgebildeten Lagerkäfigen kommt in der Regel ein Gussverfahren, insbesondere Spritzgießverfahren zum Einsatz. Dabei besteht jedoch das Problem, dass die Taschen zur Aufnahme der Lagernadeln in dem Lagerkäfig die vorgenannten geometrischen Strukturen derart aufweisen, dass diese je nach Blickrichtung mehrere Hinterschnitte ausbilden. Um daher derartige Hinterschnitte in Bezug auf einen einstückigen Lagerkäfig realisieren zu können, wurde bisher ein Gießverfahren umgesetzt, bei dem die Formteile bewegliche Teile aufweisen, die derart angeordnet und ausgestaltet sind, dass sie nach erfolgter Aushärtung des so gegossenen Lagerkäfigs zuerst entfernt werden müssen, um die Formteile trennen und das Gußteil entnehmen zu können. Hierdurch stellen die Hinterschnitte der geometrischen Strukturen, wie den Sperrzungen, dann kein Hindernis mehr für das Trennen der Formteile dar.

Es erklärt sich jedoch von selbst, dass ein derartiges Herstellungsverfahren aufgrund der komplizierten und ggfs. mehrteiligen Formteile sehr kostenintensiv und prinzipiell auch eher fehleranfällig ist.

Diverse Herstellungsverfahren in Bezug auf Lagerkäfige zeigen beispielsweise die EP 2 085 627 A1, bei der die Käfigtaschen für die Rollen ausgestanzt werden, sowie die EP 2 696 092 A2 und die DE 10 2004 031792 A1, die allgemein diesbezügliche Spritzgussverfahren offenbaren.

Ausgehend davon ist es eine Aufgabe der Erfindung, ein optimiertes Herstellungsverfahren für derartige Lagerkäfige zur Verfügung zu stellen sowie einen Lagerkäfig, der sich auf einfache Art und Weise und kostengünstig herstellen lässt.

Gelöst wird diese Aufgabe mit einem Verfahren zur Herstellung eines einstückigen Lagerkäfigs für ein Nadellager zur Lagerung eines Zuspannhebels einer Zuspanneinrichtung in einer Scheibenbremse nach Anspruch 1 sowie mit einem entsprechenden Lagerkäfig nach Anspruch 4. Darüber hinaus schlägt die Erfindung eine Scheibenbremse für Fahrzeuge, insbesondere für Nutzfahrzeuge nach Anspruch 12 sowie ein Formteil für ein solches Herstellungsverfahren nach Anspruch 13 vor.

In einem ersten Aspekt betrifft die Erfindung ein Verfahren zur Herstellung eines einstückigen Lagerkäfigs für ein Nadellager zur Lagerung eines Zuspannhebels einer Zuspanneinrichtung in einer Scheibenbremse, der eine kreisbogenabschnittsförmige Geometrie mit Taschen für die Aufnahme von Lagernadeln aufweist, wobei die Taschen zumindest teilweise mit geometrischen Strukturen versehen sind, die als Haltesegmente ausgebildet sind, die Lagernadeln verliersicher und drehbar in den Taschen zu halten, mit den Schritten:
- Fügen von zwei teilweise ineinandergreifenden Formteilen unter Ausbildung der Gussform für den Lagerkäfig durch eine Bewegung der Formteile aufeinander zu entlang einer gemeinsamen Linearrichtung;
- Durchführen des Gießvorgangs; und
- Trennen der Formteile nach Ablauf einer definierten Aushärtung entlang dieser Linearrichtung,
wobei die Formteile jeweils eine solche Ausgestaltung aufweisen, dass im zusammengefügten Zustand der Formteile die Trennflächen eines jeden Formteils in Bezug auf die Linearrichtung keinen Hinterschnitt aufweisen.

Gemäß der Erfindung ist es vorgesehen, dass die Formteile vorzugsweise derart ausgebildet sind, dass die Linearrichtung beim Trennvorgang quer zu der Axialrichtung der Lagernadeln verläuft, d.h. senkrecht zu deren Längserstreckung ausgerichtet ist.

In einer weiteren bevorzugten Ausführungsform des Verfahrens gemäß der Erfindung ist ein Formteil so ausgebildet, dass im Zuge des Gießvorgangs zumindest ein Haltesegment ausgebildet wird, während zumindest ein weiteres Haltesegment, das diesem Haltesegment in der Tasche in Bezug auf die Linearrichtung gegenüberliegt, durch das weitere Formteil ausgebildet wird. Im montierten Zustand des Lagerkäfigs mit in den Taschen eingefügten Lagernadeln liegen folglich diese Haltesegmente in Bezug auf die Umfangsfläche der Lagernadeln einander gegenüber.

In einem zweiten Aspekt betrifft die Erfindung einen Lagerkäfig für ein Nadellager zur Lagerung eines Zuspannhebels einer Zuspanneinrichtung in einer Scheibenbremse, der eine kreisbogenabschnittsförmige Geometrie mit Taschen für die Aufnahme von Lagernadeln aufweist, wobei zumindest eine der Taschen zumindest teilweise mit geometrischen Strukturen versehen sind, die als Haltesegmente ausgebildet sind, die Lagernadeln verliersicher und drehbar in den Taschen zu halten, wobei der Lagerkäfig einstückig ausgebildet ist, und wobei die so strukturierten Haltesegmente mittels zwei in einer gemeinsamen Linearrichtung gegenläufig und aufeinander zu bewegbaren Formteilen hergestellt sind derart, dass im zusammengefügten Zustand der Formteile die Trennflächen eines jeden Formteils in Bezug auf die Linearrichtung keinen Hinterschnitt aufweisen.

Im Sinne der Erfindung soll hierbei als Hinterschnitt der geometrischen Strukturen bzw. Haltesegmente jeweils eine solche Form bzw. ein solches Gebilde innerhalb des integralen Aufbaus des Lagerkäfigs verstanden werden, die bzw. das in Bezug auf eine jeweilige Blickrichtung auf den Lagerkäfig und damit auch in Bezug auf die Linearrichtung der Bewegungen der Formteile in geometrischer Hinsicht ein Hindernis für einen einfachen Trennvorgang darstellen würde. So können beispielsweise die Sperrzungen, gesehen von der Rückseite des Lagerkäfigs, einen solchen Hinterschnitt ausbilden.

Indem gemäß der Erfindung die Formteile sich ausschließlich linear aufeinander zu bewegen und wieder trennen, sind gemäß der Erfindung die Trennflächen beider Formteile jeweils in Bezug auf die zu gießende Form des Lagerkäfigs so ausgebildet, dass ein Hinterschnitt der geometrischen Strukturen, der sich in Bezug auf ein Formteil einstellen bzw. ergeben würde, durch das jeweils gegenüberliegende Formteil form- bzw. ausformbar und umgekehrt. Die Trennflächen der Formteile sind folglich dergestalt, dass keine Flächenabschnitte vorgesehen sind, die vom Rand zur Mitte des Formteils hin hinter eine vertikale Linie, die im Prinzip der Linearrichtung entspricht, zurückfallen würden.

Hierbei ist es gemäß der Erfindung möglich, dass diese Haltesegmente im Bereich der Taschen zur Aufnahme der Lagernadeln in Bezug auf die Axialrichtung der Lagernadeln nur abschnittsweise vorgesehen sind, insbesondere sich in der Mitte der Taschen in symmetrischer Anordnung, bezogen auf die Längsachse des Lagerkäfigs, befinden. In einer Weiterbildung der Erfindung sind die Taschen für die Aufnahme von zumindest zwei parallel angeordneten Lagernadeln ausgebildet.

In einer bevorzugten Ausführungsform des Lagerkäfigs gemäß der Erfindung ist zumindest eine Tasche davon so ausgestaltet, dass in Bezug auf ihre Mitte quer zur Axialrichtung der Lagernadeln zu beiden Seiten jeweils ein Haltesegment und symmetrisch zu ihrer Mitte ein weiteres Haltesegment vorgesehen ist, wobei diese Haltesegmente vorzugsweise einander, d.h. unter Einbettung der Lagernadeln, gegenüberliegend angeordnet sind.

Hierbei sollen sich die Haltesegmente in einer weiteren bevorzugten Ausführungsform in Axialrichtung der Lagernadeln gesehen, d.h. entlang ihrer Längserstreckung, nicht überlappen.

Insbesondere ist der Lagerkäfig gemäß der Erfindung ausgestaltet, dass zumindest ein Haltesegment an der nach außen gewölbten Fläche des Lagerkäfigs und zumindest ein weiteres Haltesegment an der nach innen gewölbten Fläche des Lagerkäfigs angeordnet ist.

Hinsichtlich der kreisbogenabschnittsförmigen Geometrie des Lagerkäfigs weist diese eine Erstreckung auf, die maximal einem Halbkreis entspricht.

Ferner betrifft die Erfindung in einem dritten Aspekt eine Scheibenbremse für Fahrzeuge, insbesondere pneumatisch betätigbare Scheibenbremse für Nutzfahrzeuge, mit einem Bremssattel und einer im Bremssattel angeordneten Zuspanneinrichtung zum Zuspannen der Bremse, wobei die Zuspanneinrichtung ein Zuspannelement, insbesondere einen Drehhebel, aufweist, der mittels zumindest eines Nadellagers im Bremssattel drehbar gelagert ist, wobei das Nadellager zumindest einen Lagerkäfig gemäß einem der oben genannten Ausgestaltungen aufweist.

In einem vierten Aspekt betrifft die Erfindung noch ein Formteil zur Herstellung eines einstückigen Lagerkäfigs für ein Nadellager zur Lagerung eines Zuspannhebels einer Zuspanneinrichtung in einer Scheibenbremse, der eine kreisbogenabschnittsförmige Geometrie mit Taschen für die Aufnahme von Lagernadeln aufweist, wobei zumindest eine der Taschen zumindest teilweise mit geometrischen Strukturen versehen sind, die als Haltesegmente ausgebildet sind, die Lagernadeln verliersicher und drehbar in den Taschen zu halten, im Wege eines Gießvorgangs, wobei das Formteil derart ausgebildet ist, dass es mit einem komplementären Formteil unter Ausbildung einer Gussform für den Lagerkäfig in einer gemeinsamen Linearrichtung aufeinander zu bewegbar und in dieser Linearrichtung wieder trennbar ist und dass die Trennflächen eines jeden Formteils im zusammengefügten Zustand der Formteile in Bezug auf die Linearrichtung keinen Hinterschnitt aufweisen.

In einer bevorzugten Ausführungsform des Formteils gemäß der Erfindung ist dieses derart ausgebildet, dass die Linearrichtung beim Trennen von dem weiteren Formteil quer zu der Axialrichtung der Lagernadeln ausgerichtet ist.

In einer noch weiteren bevorzugten Ausführungsform des Formteils ist dieses derart ausgebildet, dass im Zuge des Gießvorgangs zumindest ein Haltesegment durch dieses ausgebildet wird, während zumindest ein weiteres Haltesegment, das diesem Haltesegment in der Tasche in Bezug auf die Lagernadel(n) gegenüberliegt, durch das weitere Formteil ausgebildet wird.

Aufgrund der erfindungsgemäßen Ausgestaltung der zum Einsatz kommenden Formteile geht das Herstellungsverfahren für einen Lagerkäfig, vorzugsweise Spritzgießen als Kunststoffteile, gemäß der Erfindung mit mehreren Vorteilen einher.

So erweist sich das Herstellungsverfahren insgesamt als kostengünstiger, da einerseits einfacher konstruiertere Formteile verwendet werden können, die darüber hinaus keine beweglichen Teile benötigen, und da andererseits sich deshalb die Formteile nach der Aushärtung schneller trennen und der gegossene Lagerkäfig sich schneller entnehmen lässt, wodurch sich die Wirtschaftlichkeit des gesamten Herstellungsprozesses wesentlich erhöht. Darüber hinaus kann aufgrund der einfacheren Ausgestaltung der Formteile die Fehleranfälligkeit beim Gießen und damit einhergehend die Ausschussquote im Vergleich zu den bisherigen Herstellungsverfahren aus dem Stand der Technik in Bezug auf einstückige Lagerkäfige reduziert werden.

Weitere Merkmale und Vorteile der Erfindung ergeben sich aus der Erläuterung des anhand der beigefügten Zeichnungen dargestellten Ausführungsbeispiels. Es zeigen:
- Figur 1: eine Frontalansicht eines Lagerkäfigs mit einem Schnitt durch diesen Lagerkäfig entlang A-A;
- Figur 2: einen vergrößerten Ausschnitt des Lagerkäfigs mit Schnitten entlang 1-1 und entlang 2-2;
- Figur 3A: in einer schematischen Darstellung die beiden Formteile gemäß Schnitt 1-1 aus Figur 2 in einem geöffneten Zustand und
- Figur 3B: in einem geschlossenen Zustand vor Durchführung eines Gießvorgangs;
- Figur 4A: in einer schematischen Darstellung die beiden Formteile gemäß Schnitt 2-2 aus Figur 2 in einem geöffneten Zustand und
- Figur 4B: in einem geschlossenen Zustand vor Durchführung eines Gießvorgangs;
- Figur 5A: in schematischer Darstellung die Trennung der beiden Formteile gemäß Schnitt 1-1 aus Figur 2 nach Beendigung des Gießvorgangs zur Entnahme des Lagerkäfigs;
- Figur 5B: in schematischer Darstellung die Trennung der beiden Formteile gemäß Schnitt 2-2 aus Figur 2 nach Beendigung des Gießvorgangs zur Entnahme des Lagerkäfigs;
- Figur 6: einen vergrößerten Ausschnitt eines Querschnitts durch einen Lagerkäfig mit einander gegenüberliegenden Haltesegmenten einer Tasche; und
- Figur 7: schematisch einen Lagerkäfig in zwei perspektivischen Ansichten zur Veranschaulichung der durch die Formteile ausbildbaren Flächen.

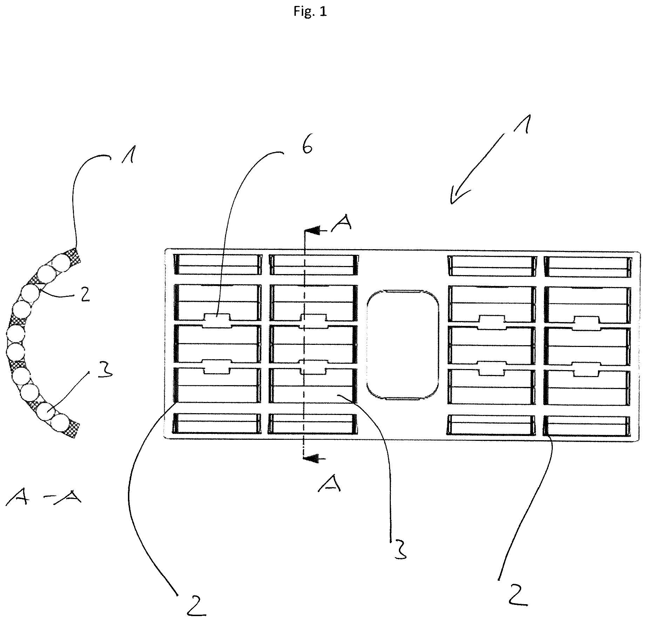

In der Figur 1 ist in Vorderansicht, d.h. mit Blick auf die nach innen gewölbte Fläche, ein Lagerkäfig 1 für ein Nadellager zur drehbaren Lagerung eines Drehhebels einer Zuspanneinrichtung für eine Scheibenbremse gezeigt.

Der einstückig, vorzugsweise aus Kunststoff ausgebildete Lagerkäfig 1 weist, wie die Schnittdarstellungen zeigen, eine kreisbogenförmige, d.h. zumindest abschnittsweise zylindrische Gestalt auf. In dem Lagerkäfig 1 sind in gleichförmiger Anordnung mehrere Taschen 2 vorgesehen, die der Aufnahme von Lagernadeln 3 dienen, wobei jeweils zwei Lagernadeln 3 pro Tasche 2 drehbar in diesen gelagert sind.

Damit die Lagernadeln 3 in den Taschen 2 verliersicher gehalten werden, weisen diese Taschen 2 geometrische Strukturen bzw. Ausformungen oder Gebilde 4,5,6 auf, die derart ausgebildet sind, dass sie als Haltesegmente die Lagernadeln 3 drehbar in den Taschen 2 halten, diese jedoch nicht herausfallen können, was beispielsweise durch entsprechende Toleranzbereiche der Maße realisiert wird.

Die geometrischen Strukturen 4,5,6 sind im Verlauf der Taschen 2, d.h. in Längsrichtung gesehen, die der Drehachse in Bezug auf den Drehhebel entspricht, unterschiedlich ausgestaltet und können beispielsweise leichte Vorsprünge, Rampen, Kragen oder dergleichen, wie beispielsweise kongruente Führungen für die Lagernadeln 2 umfassen.

Dabei ist z.B. mittig in zumindest einer der Taschen 2 eine Sperrzunge 6 vorgesehen, die ein Herausfallen der Lagernadeln 3 nach hinten verhindert.

In Bezug auf ein Herstellungsverfahren, wie beispielsweise dem Spritzgießen, würden diese geometrischen Strukturen 4,5,6 Hinterschnitte in Bezug auf die jeweils aufeinander zu beweglichen Formteile ausbilden. Um es daher gemäß der Erfindung zu ermöglichen, dass diese Formteile ohne Probleme nach Beendigung des Gießvorgangs wieder leicht zu trennen sind, ist es ein Bestreben der vorliegenden Erfindung, dass diese Hinterschnitte für derartige Trennbewegungen kein Hindernis darstellen.

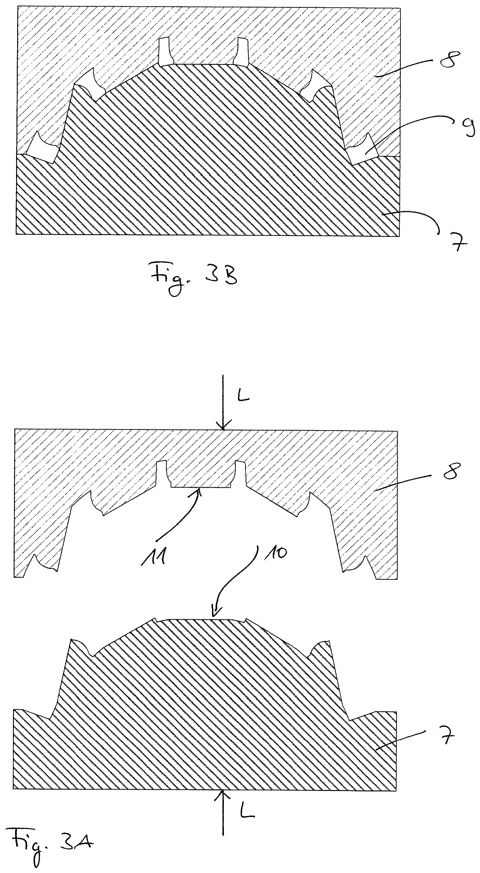

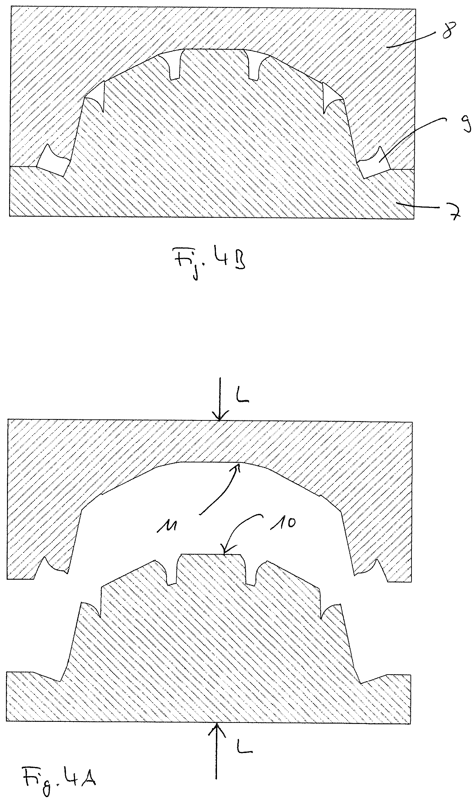

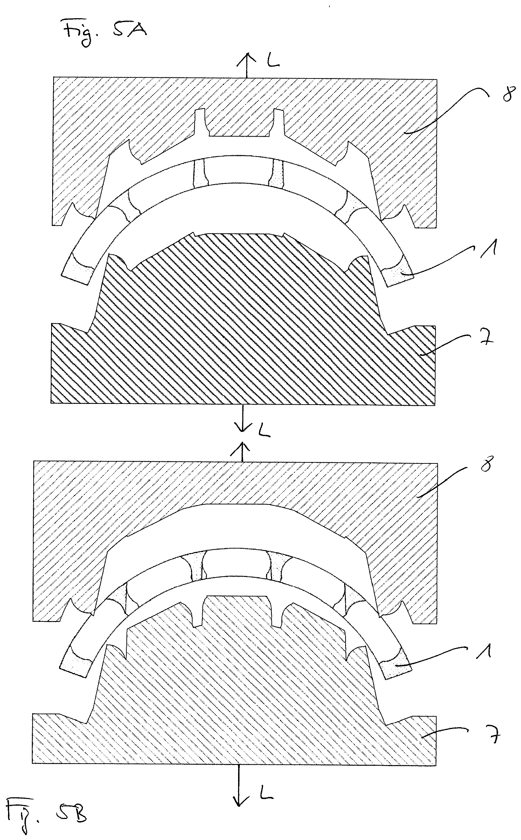

Wie die Figuren 3A bis 5B zeigen, sind die Formteile, ein unteres Formteil 7 in Bezug auf die nach innen gewölbte Fläche des Lagerkäfigs 1 und ein oberes Formteil 8 in Bezug auf die nach außen gewölbte Fläche des Lagerkäfigs 1 derart ausgestaltet und konzipiert, dass im zusammengefügten Zustand der Formteile 7, 8 unter Ausbildung der Gussform 9 die jeweiligen Trennflächen 10 und 11 eines jeden Formteils 7 und 8 in Bezug auf eine gemeinsame Linearrichtung L keinen Hinterschnitt aufweisen. Die Linearrichtung L entspricht der Richtung der Bewegung der Formteile 7,8 aufeinander zu beim Ausbilden der Gussform 9 und der Richtung der Bewegung voneinander weg beim Trennen der Formteile 7,8 zum Zweck des Auswurfs des Lagerkäfigs 1.

Gemäß der Erfindung sind daher sowohl ein oberes Formteil 8 als auch ein unteres Formteil 7 im Verhältnis zueinander einerseits als auch im Verhältnis zu dem zu gießenden Gegenstand, dem Lagerkäfig 1, derart konzipiert und ausgestaltet, dass jeder in Bezug auf das obere Formteil 8 ausgebildeter Hinterschnitt der geometrischen Strukturen 4,5,6 durch das gegenüberliegende Formteil 7 ausgeformt wird, während zur gleichen Zeit jeder in Bezug auf das untere Formteil 7 ausgebildeter Hinterschnitt der geometrischen Strukturen 4,5,6 durch das gegenüberliegende, obere Formteil 8 ausgeformt wird, wie die Figuren 3A bis 5B verdeutlichen.

Auf diese Weise wird sichergestellt, dass sich beide Formteile 7,8 einfach trennen lassen und der dann so gegossene Lagerkäfig 1 auf einfache Art und Weise entnehmen lässt. Hinterschnitte werden folglich durch die geometrische Ausgestaltung der Trennflächen 10,11 des jeweils gegenüberliegenden Formteils 7 oder 8 quasi aufgelöst.

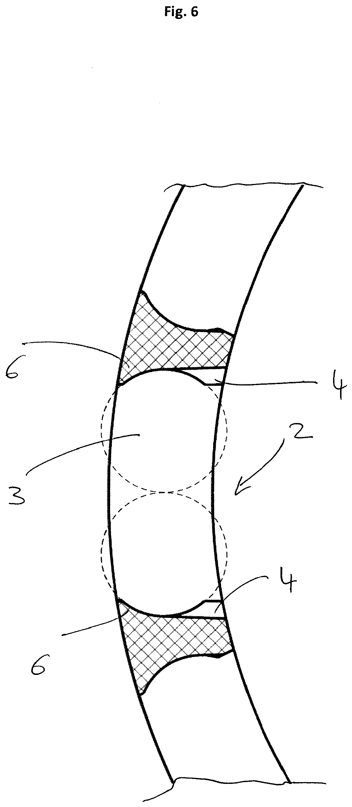

In der Figur 6 ist ein vergrößerter Querschnitt durch einen Lagerkäfig 1 gezeigt, der die Haltefunktion der im Zuge des erfindungsgemäßen Verfahrens ausgebildeten strukturierten Haltesegmente veranschaulicht.

In Bezug auf zumindest eine Tasche 2 des Lagerkäfigs 1, vorzugsweise die bezogen auf den Kreisbogenverlauf des Lagerkäfigs 1 mittigen Taschen 2, weist diese Tasche 2 oben und unten je ein Haltesegment 6 im Bereich der nach außen gewölbten Fläche des Lagerkäfigs 1 auf. An der gegenüberliegenden Seite, also an der nach innen gewölbten Fläche des Lagerkäfigs 1 ist oben und unten jeweils ein weiteres Haltesegment 4 vorgesehen. Dadurch werden zwei Lagernadeln 3 (gestrichelt angedeutet) drehbar und verliersicher in der Tasche 2 gehalten.

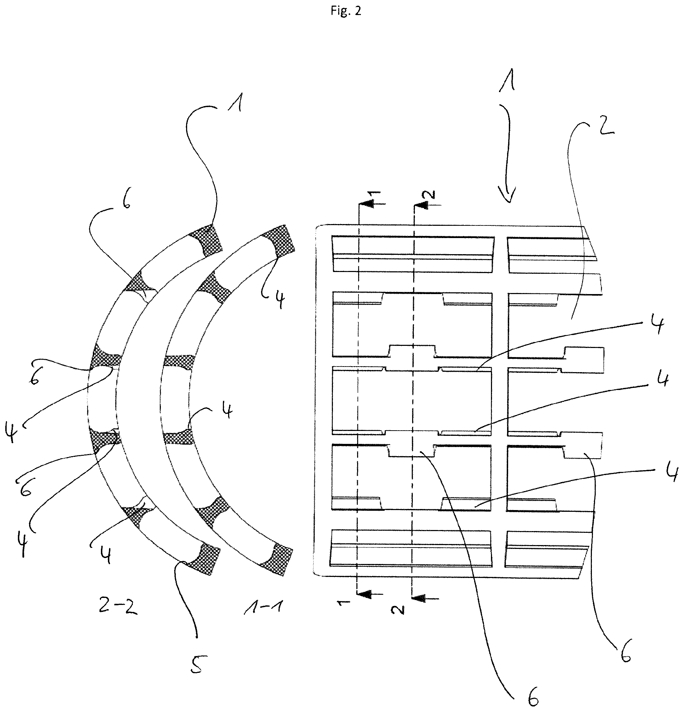

Wie die Figuren 1, 2 und 7 verdeutlichen, ist es dabei gemäß der Erfindung vorgesehen, dass die Haltesegmente in Bezug auf die nach außen gewölbte Fläche mittig, d.h. symmetrisch zur Mitte der Tasche 2, ausgebildet sind, wobei die gegenüberliegenden Haltesegmente 4 an der nach innen gewölbten Fläche zu beiden Seiten, in Axialrichtung der Lagernadeln 3 gesehen, vorgesehen sind. In dieser Axialrichtung überlappen sich die Haltesegmente 4 und 6 nicht, sondern weisen zwischen sich noch einen kleinen freien Versatz auf.

Je weiter die jeweilige Tasche 2 auf dem Kreisbogenabschnitt des Lagerkäfigs 1 von der Mitte nach außen liegt, desto unterschiedlicher in Bezug auf ihre Dimensionen werden die Haltesegmente 4,5,6 ausgeformt, um entsprechende Hinterschnitte zu vermeiden, wie sich ebenfalls in den Figuren 1, 2 und 7 erkennen lässt.

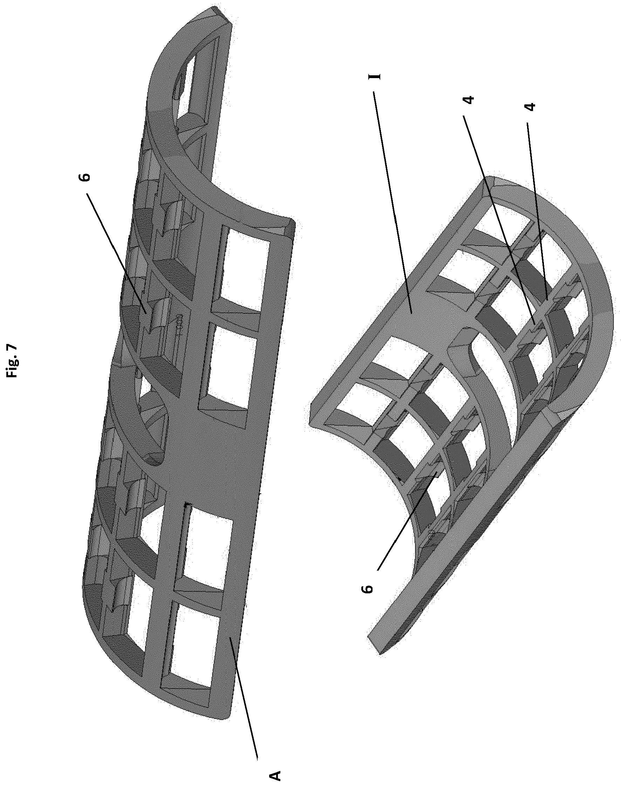

In der Figur 7 sind schematisch zwei perspektivische Ansichten ein und desselben Lagerkäfigs 1 gezeigt.

Dabei gibt die blau/dunkelgrau dargestellte Fläche A, die sich mehrheitlich auf die nach außen gewölbte Fläche des Lagerkäfigs 1 bezieht, diejenigen Flächenabschnitte wieder, die beim Spritzgießen infolge des oberen Formteils 8 ausgebildet werden, während die rot/hellgrau dargestellte Fläche I, die sich mehrheitlich auf die nach innen gewölbte Fläche des Lagerkäfigs 1 bezieht, diejenigen Flächenabschnitte wiedergibt, die beim Spritzgießen gleichzeitig infolge des unteren Formteils 7 ausgebildet werden. Teilweise umfassen diese Flächenabschnitte auch die Innenränder der Taschen 2.

Wie zu erkennen ist, wird beispielsweise die Außenfläche des Haltesegments 6 an der nach außen gewölbten Fläche des Lagerkäfigs 1 durch das äußere, obere Formteil 8 und die zur Führung der Lagernadeln 3 gekrümmte Innenfläche dieses Haltesegments 6 durch das innere, untere Formteil 7 ausgeformt. In analoger Weise wird jeweils die Außenfläche der Haltesegmente 4 an der nach innen gewölbten Fläche des Lagerkäfigs 1 durch das innere, untere Formteil 7 und die zur Führung der Lagernadeln 3 gekrümmte Innenfläche dieser Haltesegmente 4 durch das äußere, obere Formteil 8 ausgeformt.

## Patentansprüche

1. Verfahren zur Herstellung eines einstückigen Lagerkäfigs (1) für ein Nadellager zur Lagerung eines Zuspannhebels einer Zuspanneinrichtung in einer Scheibenbremse, der eine kreisbogenabschnittsförmige Geometrie mit Taschen (2) für die Aufnahme von Lagernadeln (3) aufweist, wobei die Taschen (2) zumindest teilweise mit geometrischen Strukturen versehen sind, die als Haltesegmente (4,5,6) ausgebildet sind, die Lagernadeln (3) verliersicher und drehbar in den Taschen (2) zu halten, mit den Schritten:
- Fügen von zwei teilweise ineinandergreifenden Formteilen (7,8) unter Ausbildung der Gussform (9) für den Lagerkäfig (1) durch eine Bewegung der Formteile (7,8) aufeinander zu entlang einer gemeinsamen Linearrichtung (L);
- Durchführen des Gießvorgangs; und
- Trennen der Formteile (7,8) nach Ablauf einer definierten Aushärtung entlang dieser Linearrichtung (L),
wobei die Formteile (7,8) jeweils eine solche Ausgestaltung aufweisen, dass im zusammengefügten Zustand der Formteile (7,8) die Trennflächen (10,11) eines jeden Formteils (7,8) in Bezug auf die Linearrichtung (L) keinen Hinterschnitt aufweisen.

2. Verfahren nach Anspruch 1, bei dem die Formteile (7,8) derart ausgebildet sind, dass die Linearrichtung (L) beim Trennen quer zu der Axialrichtung der Lagernadeln (3) ausgerichtet ist.

3. Verfahren nach Anspruch 1 oder 2, bei dem ein Formteil (7) ausgebildet ist, im Zuge des Gießvorgangs zumindest ein Haltesegment (4) auszubilden, während zumindest ein Haltesegment (6), das dem Haltesegment (4) in der Tasche (2) in Bezug auf die Linearrichtung (L) gegenüberliegt, durch das weitere Formteil (8) ausgebildet wird.

4. Lagerkäfig (1) für ein Nadellager zur Lagerung eines Zuspannhebels einer Zuspanneinrichtung in einer Scheibenbremse, der eine kreisbogenabschnittsförmige Geometrie mit Taschen (2) für die Aufnahme von Lagernadeln (3) aufweist, wobei zumindest eine der Taschen (2) zumindest teilweise mit geometrischen Strukturen versehen sind, die als Haltesegmente (4,5,6) ausgebildet sind, die Lagernadeln (3) verliersicher und drehbar in den Taschen (2) zu halten, wobei der Lagerkäfig (1) einstückig ausgebildet ist,
**dadurch gekennzeichnet, dass**
die Haltesegmente (4,5,6) mittels zwei in einer gemeinsamen Linearrichtung (L) gegenläufig und aufeinander zu bewegbaren Formteilen (7,8) hergestellt sind derart, dass im zusammengefügten Zustand der Formteile (7,8) die Trennflächen (10,11) eines jeden Formteils (7,8) in Bezug auf die Linearrichtung (L) keinen Hinterschnitt aufweisen.

5. Lagerkäfig nach Anspruch 4, bei dem die Haltesegmente (4,5,6) im Bereich der Taschen (2) in Bezug auf die Axialrichtung der Lagernadeln (3) nur abschnittsweise vorgesehen sind.

6. Lagerkäfig nach Anspruch 5, bei dem die Haltesegmente (6) in der Mitte der Taschen (2) in symmetrischer Anordnung vorgesehen sind.

7. Lagerkäfig nach Anspruch 4, 5 oder 6, bei dem die Taschen (2) für die Aufnahme von zwei parallel angeordneten Lagernadeln (3) ausgebildet sind.

8. Lagerkäfig nach einem der Ansprüche 4 bis 7, bei dem zumindest eine Tasche (2) in Bezug auf ihre Mitte quer zur Axialrichtung der Lagernadeln (3) zu beiden Seiten jeweils ein Haltesegment (4) und symmetrisch zu ihrer Mitte ein Haltesegment (6) aufweist.

9. Lagerkäfig nach Anspruch 8, bei dem sich in Axialrichtung der Lagernadeln (3) gesehen die Haltesegmente (4) und (6) nicht überlappen.

10. Lagerkäfig nach Anspruch 8 oder 9, bei dem das Haltesegment (6) an der nach außen gewölbten Fläche des Lagerkäfigs (1) und die Haltesegmente (4) an der nach innen gewölbten Fläche des Lagerkäfigs (1) vorgesehen sind.

11. Lagerkäfig nach einem der Ansprüche 4 bis 10, bei dem der Lagerkäfig (1) eine Erstreckung aufweist, die maximal einem Halbkreis entspricht.

12. Scheibenbremse für Fahrzeuge, insbesondere pneumatisch betätigbare Scheibenbremse für Nutzfahrzeuge, mit einem Bremssattel und einer im Bremssattel angeordneten Zuspanneinrichtung zum Zuspannen der Bremse, wobei die Zuspanneinrichtung ein Zuspannelement, insbesondere einen Drehhebel, aufweist, der mittels zumindest eines Nadellagers im Bremssattel drehbar gelagert ist, wobei das Nadellager zumindest einen Lagerkäfig (1) nach einem der Ansprüche 4 bis 11 aufweist.

13. Formteil (7;8) zur Herstellung eines einstückigen Lagerkäfigs (1) für ein Nadellager zur Lagerung eines Zuspannhebels einer Zuspanneinrichtung in einer Scheibenbremse, der eine kreisbogenabschnittsförmige Geometrie mit Taschen (2) für die Aufnahme von Lagernadeln (3) aufweist, wobei zumindest einer der Taschen (2) zumindest teilweise mit geometrischen Strukturen versehen sind, die als Haltesegmente (4,5,6) ausgebildet sind, die Lagernadeln (3) verliersicher und drehbar in den Taschen (2) zu halten, im Wege eines Gießvorgangs, wobei das Formteil (7;8) derart ausgebildet ist, dass es mit einem weiteren Formteil (8;7) unter Ausbildung einer Gussform (9) für den Lagerkäfig (1) in einer gemeinsamen Linearrichtung (L) aufeinander zu bewegbar und in dieser Linearrichtung (L) wieder trennbar ist und dass die Trennflächen (10;11) eines jeden Formteils (7;8) im zusammengefügten Zustand der Formteile (7;8) in Bezug auf die Linearrichtung (L) keinen Hinterschnitt aufweisen.

14. Formteil (7,8) nach Anspruch 13, bei dem das Formteil (7,8) derart ausgebildet ist, dass die Linearrichtung (L) beim Trennen von dem weiteren Formteil (8,7) quer zu der Axialrichtung der Lagernadeln (3) ausgerichtet ist.

15. Formteil (7,8) nach Anspruch 13 oder 14, bei dem das Formteil (7,8) ausgebildet ist, im Zuge des Gießvorgangs zumindest ein Haltesegment (4;6) auszubilden, während zumindest ein Haltesegment (6;4), das dem Haltesegment (4) in der Tasche (2) in Bezug auf die Linearrichtung (L) gegenüberliegt, durch das weitere Formteil (8,7) ausgebildet wird.

## Claims

1. Method for manufacturing a one-piece bearing cage (1) for a needle bearing for supporting a clamping lever of a clamping device in a disc brake, which bearing cage (1) has a circular arc section-shaped geometry with pockets (2) for receiving bearing needles (3), the pockets (2) being provided at least partially with geometric structures which are designed as retaining segments (4,5,6) for retaining the bearing needles (3) in the pockets (2) in a loss-proof and rotatable manner, comprising the steps:
- joining two partially interlocking mold parts (7,8) to form the casting mold (9) for the bearing cage (1) by moving the mold parts (7,8) toward each other along a common linear direction (L);
- performing the casting operation; and
- separating the mold parts (7,8) after a defined curing time has elapsed along this linear direction (L),
wherein the mold parts (7,8) each have such a configuration that, in the joined state of the mold parts (7,8), the parting surfaces (10,11) of each mold part (7,8) do not comprise an undercut with respect to the linear direction (L).

2. Method according to claim 1, in which the mold parts (7,8) are designed in such a way that the linear direction (L) is aligned transversely to the axial direction of the bearing needles (3) during separating.

3. Method according to claim 1 or 2, in which a mold part (7) is designed to form at least one retaining segment (4) in the course of the casting process, while at least one retaining segment (6), which is opposite the retaining segment (4) in the pocket (2) with respect to the linear direction (L), is formed by the further mold part (8).

4. Bearing cage (1) for a needle bearing for supporting a clamping lever of a clamping device in a disc brake, which bearing cage has a circular arc section-shaped geometry with pockets (2) for receiving bearing needles (3), at least one of the pockets (2) being provided at least partially with geometric structures which are designed as retaining segments (4,5,6) for retaining the bearing needles (3) in the pockets (2) in a loss-proof and rotatable manner, the bearing cage (1) being designed in one piece,
**characterized in that**
the retaining segments (4,5,6) can be produced by means of two mold parts (7,8) which can be moved in opposite directions and towards one another in a common linear direction (L) in such a way that, in the joined state of the mold parts (7,8), the parting surfaces (10,11) of each mold part (7,8) comprise no undercut with respect to the linear direction (L).

5. Bearing cage according to claim 4, in which the retaining segments (4,5,6) in the region of the pockets (2) are provided only in sections with respect to the axial direction of the bearing needles (3).

6. Bearing cage according to claim 5, in which the retaining segments (6) are provided in symmetrical arrangement in the center of the pockets (2).

7. Bearing cage according to claim 4, 5 or 6, in which the pockets (2) are designed to receive two parallel bearing needles (3).

8. Bearing cage according to one of claims 4 to 7, in which at least one pocket (2) comprises a retaining segment (4) with respect to its center transversely to the axial direction of the bearing needles (3) to both sides, respectively, and a retaining segment (6) symmetrically to its center.

9. Bearing cage according to claim 8, in which, viewed in the axial direction of the bearing needles (3), the retaining segments (4) and (6) do not overlap.

10. Bearing cage according to claim 8 or 9, in which the retaining segment (6) is provided on the outwardly curved surface of the bearing cage (1) and the retaining segments (4) are provided on the inwardly curved surface of the bearing cage (1).

11. Bearing cage according to one of claims 4 to 10, in which the bearing cage (1) has an extension corresponding at most to a semicircle.

12. Disc brake for vehicles, in particular pneumatically operable disc brake for commercial vehicles, with a brake caliper and a clamping device arranged in the brake caliper for applying the brake, wherein the clamping device has a clamping element, in particular a rotary lever, which is rotatably mounted in the brake caliper by means of at least one needle bearing, wherein the needle bearing has at least one bearing cage (1) according to one of the claims 4 to 11.

13. Mold part (7;8) for manufacturing a one-piece bearing cage (1) for a needle bearing for supporting a clamping lever of a clamping device in a disc brake, which bearing cage has a circular arc section-shaped geometry with pockets (2) for receiving bearing needles (3), at least one of the pockets (2) being at least partially provided with geometric structures which are designed as retaining segments (4,5,6) for retaining the bearing needles (3) in the pockets (2) in a loss-proof and rotatable manner, by means of a casting process, the mold part (7;8) being designed in such a way that it can be moved towards one another in a common linear direction (L) with a further mold part (8;7), forming a casting mold (9) for the bearing cage (1), and can be separated again in this linear direction (L), and in that the parting surfaces (10;11) of each mold part (7;8), in the joined state of the mold parts (7;8), comprise no undercut with respect to the linear direction (L).

14. Mold part (7;8) according to claim 13, in which the mold part (7;8) is designed in such a way that the linear direction (L) is oriented transversely to the axial direction of the bearing needles (3) when separating from the further mold part (8;7).

15. Mold part (7;8) according to claim 13 or 14, in which the mold part (7;8) is designed to form at least one retaining segment (4;6) in the course of the casting process, while at least one retaining segment (6;4) facing the retaining segment (4) in the pocket (2) with respect to the linear direction (L) is formed by the further mold part (8;7).

## Revendications

1. Procédé de fabrication d'une cage de roulement en une seule pièce (1) pour un roulement à aiguilles permettant de monter un levier de serrage d'un dispositif de serrage dans un frein à disque, qui présente une géométrie en forme de section d'arc de cercle avec des poches (2) pour la réception du roulement à aiguilles (3), les poches (2) étant pourvues au moins partiellement de structures géométriques qui sont réalisées sous la forme de segments de maintien (4, 5, 6) pour maintenir le roulement à aiguilles (3) dans les poches (2) de manière sûre et rotative, comprenant les étapes consistant à :
- assembler deux pièces moulées (7, 8) partiellement imbriquées l'une dans l'autre en formant le moule (9) pour la cage de roulement (1) par un déplacement des pièces moulées (7, 8) l'une vers l'autre le long d'une direction linéaire commune (L) ;
- réaliser le processus de coulée ; et
- séparer les pièces moulées (7, 8) après déroulement d'un durcissement défini le long de cette direction linéaire (L), les pièces moulées (7, 8) présentant chacune une configuration telle qu'à l'état assemblé des pièces moulées (7, 8), les surfaces de séparation (10, 11) de chaque pièce moulée (7, 8) ne présentent pas de contre-dépouille par rapport à la direction linéaire (L).

2. Procédé selon la revendication 1, dans lequel les pièces moulées (7, 8) sont formées de telle sorte que la direction linéaire (L) est orientée transversalement à la direction axiale du roulement à aiguilles (3) lors de la séparation.

3. Procédé selon la revendication 1 ou 2, dans lequel une pièce moulée (7) est formée pour former au moins un segment de maintien (4) au cours du processus de coulée, tandis qu'au moins un segment de maintien (6), qui est opposé au segment de maintien (4) dans la poche (2) par rapport à la direction linéaire (L), est formé par l'autre pièce moulée (8).

4. Cage de roulement (1) pour un roulement à aiguilles pour le montage d'un levier de serrage d'un dispositif de serrage dans un frein à disque, qui présente une géométrie en forme de section d'arc de cercle avec des poches (2) pour la réception du roulement à aiguilles (3), au moins une des poches (2) étant pourvue au moins partiellement de structures géométriques qui sont formées sous la forme de segments de maintien (4,5,6) pour maintenir le roulement à aiguilles (3) dans les poches (2) de manière sûre et rotative, la cage de roulement (1) étant réalisée d'une seule pièce,
**caractérisée en ce que**
les segments de maintien (4, 5, 6) sont fabriqués au moyen de deux pièces moulées (7, 8) qui peuvent être déplacées l'une par rapport à l'autre dans une direction linéaire commune (L) de telle sorte que dans l'état assemblé des pièces moulées (7, 8), les surfaces de séparation (10, 11) de chaque pièce moulée (7, 8) ne présentent pas de contre-dépouille par rapport à la direction linéaire (L).

5. Cage de roulement selon la revendication 4, dans laquelle les segments de maintien (4, 5, 6) dans la zone des poches (2) ne sont prévus que par endroits par rapport à la direction axiale du roulement à aiguilles (3).

6. Cage de roulement selon la revendication 5, dans laquelle les segments de maintien (6) sont prévus agencés de manière symétrique au centre des poches (2).

7. Cage de roulement selon la revendication 4, 5 ou 6, dans laquelle les poches (2) sont conçues pour recevoir deux roulements à aiguilles (3) agencés parallèlement.

8. Cage de roulement selon l'une quelconque des revendications 4 à 7, dans laquelle au moins une poche (2) présente, par rapport à son centre, transversalement à la direction axiale du roulement à aiguilles (3) de part et d'autre, respectivement, un segment de maintien (4) et, symétriquement par rapport à son centre, un segment de maintien (6).

9. Cage de roulement selon la revendication 8, dans laquelle, vus dans la direction axiale du roulement à aiguilles (3), les segments de maintien (4) et (6) ne se chevauchent pas.

10. Cage de roulement selon la revendication 8 ou 9, dans laquelle le segment de maintien (6) est prévu sur la surface bombée vers l'extérieur de la cage de roulement (1) et les segments de maintien (4) sont prévus sur la surface bombée vers l'intérieur de la cage de roulement (1).

11. Cage de roulement selon l'une quelconque des revendications 4 à 10, dans laquelle la cage de roulement (1) présente une étendue qui correspond au maximum à un demicercle.

12. Frein à disque pour véhicules, en particulier frein à disque à commande pneumatique pour véhicules utilitaires, comprenant un étrier de frein et un dispositif de serrage disposé dans l'étrier de frein pour serrer le frein, le dispositif de serrage présentant un élément de serrage, en particulier un levier rotatif, qui est monté de manière rotative dans l'étrier de frein au moyen d'au moins un roulement à aiguilles, le roulement à aiguilles présentant au moins une cage de roulement (1) selon l'une des revendications 4 à 11.

13. Pièce moulée (7 ; 8) pour la fabrication d'une cage de roulement (1) en une seule pièce pour un roulement à aiguilles permettant le montage d'un levier de serrage d'un dispositif de serrage dans un frein à disque, qui présente une géométrie en forme de segment d'arc de cercle avec des poches (2) pour la réception du roulement à aiguilles(3), au moins une des poches (2) étant pourvue au moins partiellement de structures géométriques qui sont formées sous la forme de segments de maintien (4, 5, 6) pour maintenir le roulement à aiguilles (3) dans les poches (2) de manière amovible et rotative, au moyen d'un processus de coulée, la pièce moulée (7 ;8) étant formée de telle sorte qu'elle peut être déplacée par rapport à une autre pièce moulée (8 ; 7) en formant un moule (9) pour la cage de roulement (1) dans une direction linéaire commune (L) et peut être séparée à nouveau dans cette direction linéaire (L), et que les surfaces de séparation (10 ;11) de chaque pièce moulée (7 ;8) ne présentent pas de contre-dépouille par rapport à la direction linéaire (L) dans l'état assemblé des pièces moulées (7 ; 8).

14. Pièce moulée (7, 8) selon la revendication 13, dans laquelle la pièce moulée (7, 8) est formée de telle sorte que la direction linéaire (L) est orientée transversalement à la direction axiale du roulement à aiguilles (3) lors de la séparation depuis l'autre pièce moulée (8, 7).

15. Pièce moulée (7, 8) selon la revendication 13 ou 14, dans laquelle la pièce moulée (7, 8) est formée pour former au moins un segment de maintien (4 ; 6) au cours du processus de coulée, tandis qu'au moins un segment de maintien (6), qui est opposé au segment de maintien (4) dans la poche (2) par rapport à la direction linéaire (L), est formé par l'autre pièce moulée (8, 7).
